# EUROPEAN PATENT SPECIFICATION

(11) **EP 3 080 750 B1**
(45) Date of publication and mention of the grant of the patent: **06.11.2024**
(21) Application number: 14786649.5
(22) Date of filing: 15.10.2014
(51) Int. Cl.: G06V 10/141, G06V 10/20, G06V 20/56

(54) **METHOD FOR TRACKING A TARGET OBJECT UPON BRIGHTNESS CHANGE, CAMERA SYSTEM AND MOTOR VEHICLE**
VERFAHREN ZUR VERFOLGUNG EINES ZIELOBJEKTS BEI VERÄNDERUNG DER HELLIGKEIT, KAMERASYSTEM UND KRAFTFAHRZEUG
PROCÉDÉ POUR SUIVRE UN OBJET CIBLE LORS D'UN CHANGEMENT DE LUMINOSITÉ, SYSTÈME DE CAMÉRA ET VÉHICULE À MOTEUR

(30) Priority: 12.12.2013 DE 102013020947
(43) Date of publication of application: 19.10.2016
(73) Proprietor: Valeo Schalter und Sensoren GmbH, 74321 Bietigheim-Bissingen (DE)
(72) Inventor: CHANUSSOT, Lowik, 75019 Paris (FR); WEDAJO, Brouk, 45240 La Ferte Saint Aubin (FR)
(74) Representative: Jauregui Urbahn, Kristian
(86) International application number: PCT/EP2014/072153
(87) International publication number: WO 2015/086200

(56) References cited:
- WO-A1-01/46909
- WO-A1-01/46909
- WO-A1-2012/155956
- WO-A1-2012/155956
- KR-A- 20130 126 144
- KR-A- 20130 126 144
- SAMYONG KIM ET AL: "Front and Rear Vehicle Detection and Tracking in the Day and Night Times Using Vision and Sonar Sensor Fusion", 2005 IEEE/RSJ INTERNATIONAL CONFERENCE ON INTELLIGENT ROBOTS AND SYSTEMS; EDMONTON, AB, CANADA; 2 - 6 AUGUST 2005, IEEE, PISCATAWAY, NJ, USA, 2 August 2005 (2005-08-02), pages 2306 - 2311, XP010857417, ISBN: 978-0-7803-8912-0, DOI: 10.1109/IROS.2005.1545321
- DONATELLO CONTE ET AL: "Evaluation and Improvements of a Real-Time Background Subtraction Method", 1 January 2005, IMAGE ANALYSIS AND RECOGNITION LECTURE NOTES IN COMPUTER SCIENCE;;LNCS, SPRINGER, BERLIN, DE, PAGE(S) 1234 - 1241, ISBN: 978-3-540-29069-8, XP019020119
- SAMYONG KIM ET AL: "Front and Rear Vehicle Detection and Tracking in the Day and Night Times Using Vision and Sonar Sensor Fusion", 2005 IEEE/RSJ INTERNATIONAL CONFERENCE ON INTELLIGENT ROBOTS AND SYSTEMS; EDMONTON, AB, CANADA; 2 - 6 AUGUST 2005, IEEE, PISCATAWAY, NJ, USA, 2 August 2005 (2005-08-02), pages 2306 - 2311, XP010857417, ISBN: 978-0-7803-8912-0, DOI: 10.1109/IROS.2005.1545321
- DONATELLO CONTE ET AL: "Evaluation and Improvements of a Real-Time Background Subtraction Method", 1 January 2005, IMAGE ANALYSIS AND RECOGNITION LECTURE NOTES IN COMPUTER SCIENCE;;LNCS, SPRINGER, BERLIN, DE, PAGE(S) 1234 - 1241, ISBN: 978-3-540-29069-8, XP019020119

## Description

The invention relates to a method for tracking a target object by means of a camera system of a motor vehicle, wherein a sequence of images of an environmental region of the motor vehicle is provided by a camera of the camera system and the tracking is effected by an image processing device based on the sequence of the images. In addition, the invention relates to a camera system for performing such a method as well as to a motor vehicle with such a camera system.

Presently, the interest is in particular directed to the tracking of target vehicles with the aid of a front camera of a motor vehicle. Therein, front cameras for motor vehicles are already known from the prior art and usually capture images of an environmental region in front of the motor vehicle. This sequence of images is processed by means of an electronic image processing device, which for example detects target objects in the images. To this, the images are subjected to an object detection algorithm. Such detection algorithms are already prior art and are for example based on pattern recognition. In order to detect a target object, first, so-called characteristic points can be extracted from the image, and based on these characteristic points, a target object can then be identified. As an example, therein, the following algorithms can be mentioned: Ada-Boost and HOG-SVM.

If a target object is identified in an image of the camera, thus, this target object can also be tracked over the subsequent images of the sequence. Therein, the target object is detected in each image, wherein the detection in the current image has to be associated with the detection from the previous image. By tracking the target object, the current position of the target object in the image frame and thus also the current relative position of the target object with respect to the motor vehicle are always known. Therein, for example the Lucas Kanade method can be utilized as the tracking algorithm.

A mentioned camera system with a front camera can be used as a collision warning system, by means of which the driver can be warned of a risk of collision with the target object. Such a collision warning system can for example output warning signals in order to acoustically and/or optically and/or haptically inform the driver about the detected risk of collision. Additionally or alternatively, the camera system can also be used as an automatic brake assistance system adapted to perform automatic braking interventions of the motor vehicle due to the detected risk of collision. As a measure of the current risk of collision, therein, the so-called time to collision can for example be used, that is a period of time, which is presumably required by the motor vehicle to reach the target object. This time to collision can be calculated from the estimated distance of the target object as well as from the relative speed.

Situations, in which the lighting conditions in the region of the target object and thus also the brightness of the target object itself abruptly change, have proven problematic in camera systems. Such changes of the lighting conditions in particular occur at a tunnel entrance or a tunnel exit. If a currently tracked target vehicle enters a tunnel and the motor vehicle with the camera system is further outside of the tunnel, thus, abrupt decline of the brightness of the target vehicle occurs in the images from the point of view of the camera system. Possibly, this can also result in the tracking algorithm losing the target vehicle to sight and this target vehicle then being no longer able to be tracked by the camera system, see for example SAMYONG KIM ET AL, "Front and Rear Vehicle Detection and Tracking in the Day and Night Times Using Vision and Sonar Sensor Fusion", 2005 IEEE/RSJ INTERNATIONAL CONFERENCE ON INTELLIGENT ROBOTS AND SYSTEMS; EDMONTON, AB, CANADA; 2 - 6 AUGUST 2005, IEEE, PISCATAWAY, NJ, USA, (20050802), doi:10.1109/IROS.2005.1545321, ISBN 978-0-7803-8912-0, pages 2306 - 2311, XP010857417.

It is an object of the invention to demonstrate a solution, how in a method of the initially mentioned kind the target object can be particularly reliably tracked even with abrupt changes of lighting conditions in the region of the target object.

According to the invention, this object is solved by a method, by a camera system as well as by a motor vehicle having the features according to the respective independent claims. Advantageous implementations of the invention are the subject matter of the dependent claims, of the description and of the figures.

A method according to the invention serves for tracking a target object by means of a camera system of a motor vehicle, wherein a sequence of images of an environmental region of the motor vehicle is provided by a camera of the camera system and the tracking of the target object is effected by an image processing device based on the sequence of the images. The target object is detected in an image of the sequence and tracked over subsequent images of the sequence using a preset tracking algorithm by the image processing device. Therein, any tracking algorithm can be used such that presently the tracking algorithm is not elaborated any more. Brightness values of pixels of the target object are acquired in the respective images. The image processing device then detects a change of a brightness of the depicted target object based on the brightness values. If this change of the brightness exceeds a predetermined amount, at least one parameter of the tracking algorithm and/or at least one parameter of the camera are manipulated due to the detection of the change.

Accordingly, the image processing device acquires the brightness values of pixels of the target object in the respective images and is able to detect a change of the brightness of the depicted target object based on the acquired brightness values. If this change of the brightness of the target object exceeds a predetermined amount (for example 30% or 40% or 50% or 60% or 70% or 80% or 90% within a preset number of frames or within a preset period of time), thus, the image processing device manipulates at least one parameter of the tracking algorithm and/or at least one parameter of the camera. Such changes of the brightness of the depicted target object for example occur upon entry of the target object into a tunnel, while the motor vehicle is further outside of the tunnel. However, the reverse case can also occur: if both the target vehicle and the ego motor vehicle are in a tunnel and if the target vehicle arrives at the tunnel exit, thus, the brightness of the target object in the images abruptly changes, wherein here the target vehicle becomes considerably brighter than the environment of the camera. In both cases, the method according to the invention proves particularly advantageous because the image processing device can for example manipulate the so-called keep-alive time interval of the tracking algorithm such that the detected target object is further interpreted as present even in absence of detections in the current images. Additionally or alternatively, the image processing device can output control signals to the camera for example to manipulate the integration time of the image sensor such that this integration time is adapted to the brightness of the target object and the target object thus can be further detected in the images. Thus, the method according to the invention overall has the advantage that the target object can be particularly reliably tracked by the image processing device even upon abrupt changes of the lighting conditions such as for example at a tunnel entrance.

Preferably, the camera is a front camera, which is in particular disposed behind a windshield of the motor vehicle, for example directly on the windshield in the interior of the motor vehicle. Then, the front camera captures the environment in direction of travel or in vehicle longitudinal direction in front of the motor vehicle. This can in particular imply that a camera axis extending perpendicularly to the plane of the image sensor is oriented parallel to and thus along the vehicle longitudinal axis.

Preferably, the camera is a video camera, which is able to provide a plurality of images (frames) per second. The camera can be a CCD camera or a CMOS camera.

The camera system can be a collision warning system, by means of which a degree of risk with respect to a collision of the motor vehicle with the target object is determined and a warning signal is output depending on the current degree of risk, by which the risk of collision is signaled to the driver. Additionally or alternatively, the camera system can also be formed as an automatic brake assistance system, by means of which brake interventions are automatically performed depending on the degree of risk. Therein, for example, the time to collision and/or a distance of the target object from the motor vehicle can be used as the degree of risk.

As already explained, for example, an integration time of the image sensor can be manipulated as the parameter of the camera, if a change of the brightness of the depicted target object is detected. Upon abrupt decline of the brightness of the target object, the integration time of the image sensor can for example be increased in order to ensure that the target object can be further detected even after the brightness change. This has the advantage that the target object can thus be further tracked and therefore a collision with the target object can optionally be prevented.

In an embodiment, it is provided that a keep-alive time interval is manipulated as the parameter of the tracking algorithm, for which the detected target object is further interpreted as present by the image processing device in absence of detections in the current images. The keep-alive time interval thus defines a period of time, for which the detected target object is interpreted as present even if this object cannot be detected in the current images. After detection of the brightness change of the target object, this keep-alive time interval can be increased in order to ensure that the data with respect to this target object remains in a memory of the image processing device at least until the motor vehicle itself arrives at the tunnel entrance, tunnel exit or the like. This too increases the safety since a collision with the target object can optionally be prevented.

The manipulation of the at least one parameter can in particular imply that the at least one parameter is increased or reduced from a current default value to a special value. If the manipulation of the parameter is not to be effected any more, thus, the parameter is again adjusted to the default value.

With respect to the detection of the change of the brightness of the depicted target object, it can be provided that an average value of the brightness values of the pixels of the target object is respectively determined to each image. Then, the change of the brightness can be detected depending on the temporal progression of the average values. The evaluation of the brightness average values allows very precise and reliable detection of brightness changes of the target object due to different lighting conditions.

In order to further increase the accuracy in detecting the brightness change, a ratio of the respective average value to the current integration time of the image sensor can also be respectively determined to each image. The change of the brightness of the depicted target object can then be detected based on the ratios. Thus, not the absolute brightness of the depicted target object is evaluated, but a relative brightness with respect to the current integration time. Thus, the detection of the brightness change can be even more precisely and reliably effected, since changes of the brightness due to a change of the integration time can be filtered out.

In an embodiment, it is provided that based on the change of the brightness of the depicted target object, a tunnel entrance or a tunnel exit in front of the motor vehicle is detected, namely according to whether the brightness of the target object is abruptly reduced or increased. The change of the brightness is thus interpreted as tunnel entrance/tunnel exit by the image processing device, which is located in front of the motor vehicle in direction of travel. The information about the detection of the tunnel entrance/tunnel exit can therefore also be provided to other systems. The detection of the tunnel entrance/tunnel exit additionally has the advantage that thus it is known in the image processing device when the motor vehicle and thus the camera presumably will get into the tunnel (or out of the tunnel) and the brightness of the environment of the camera will change. This information can then also be taken into account in adjusting the at least one parameter.

Thus, in an embodiment, it can be provided that a current distance of the target object from the motor vehicle is determined and a distance acquired in detection of the change of the brightness is interpreted by the image processing device as a current distance of the motor vehicle from a brightness change area (for example tunnel entrance or tunnel exit), in which the change of the brightness will presumably also occur for the camera itself. The manipulation of the at least one parameter can then be effected depending on this distance of the motor vehicle from the brightness change area. For example, the current distance of the motor vehicle from a tunnel entrance or a tunnel exit is acquired and taken into account in manipulation of the at least one parameter. From the distance to the mentioned brightness change area as well as from the current speed of the motor vehicle, the period of time until arriving at the brightness change area can also be calculated. Thus, it is always known in the image processing device, when exactly the motor vehicle will enter the brightness change area (for example tunnel). The at least one parameter can therefore be situation-dependent and adequately manipulated.

Thus, in an embodiment, it can be provided that the at least one parameter of the camera and/or the at least one parameter of the tracking algorithm, in particular the keep-alive time interval, are only manipulated for the period of time until arriving at the brightness change area. If the motor vehicle arrives at the brightness change area, the at least one parameter can again be adjusted to the normal value or default value. Thus, for example, the keep-alive time interval can only be increased for the period of time, during which the target object is in the tunnel and the motor vehicle is outside of the tunnel. If the motor vehicle then also enters the tunnel, the keep-alive time interval can again be reduced to a default value since the lighting conditions are identical for the target object and the motor vehicle.

In addition, the invention relates to a camera system for a motor vehicle including a camera for providing a sequence of images of an environmental region of the motor vehicle, as well as including an image processing device for tracking a target object based on the sequence of the images, wherein the image processing device is formed for performing a method according to the invention.

A motor vehicle according to the invention, in particular a passenger car, includes a camera system according to the invention.

The preferred embodiments presented with respect to the method according to the invention and the advantages thereof correspondingly apply to the camera system according to the invention as well as to the motor vehicle according to the invention.

Further features of the invention are apparent from the claims, the figures and the description of figures. All of the features and feature combinations mentioned above in the description as well as the features and feature combinations mentioned below in the description of figures and/or shown in the figures alone are usable not only in the respectively specified combination, but also in other combinations or else alone.

Below, the invention is explained in more detail based on a preferred embodiment as well as with reference to the attached drawings.

There show:
- Fig. 1: in schematic illustration a motor vehicle with a camera system according to an embodiment of the invention, wherein a target object is in front of the motor vehicle;
- Fig. 2 and 3: exemplary images provided by a camera of the camera system;
- Fig. 4: temporal progressions of a brightness and a relative brightness with constant lighting conditions; and
- Fig. 5: temporal progressions of a relative brightness of a target object and an integration time of an image sensor upon entry into a tunnel.

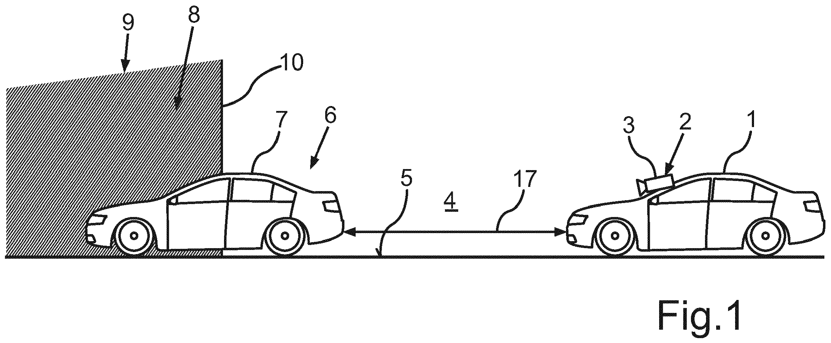

A motor vehicle 1 shown in Fig. 1 is for example a passenger car. The motor vehicle 1 includes a camera system 2, which for example serves as a collision warning system, by means of which the driver of the motor vehicle 1 can be warned of a risk of collision. Additionally or alternatively, the camera system 2 can also be formed as an automatic brake assistance system, by means of which the motor vehicle 1 can be automatically decelerated due to a detected risk.

The camera system 2 includes a camera 3, which is formed as a front camera. The camera 3 is disposed in the interior of the motor vehicle 1 on a windshield of the motor vehicle 1 and captures an environmental region 4 in vehicle longitudinal direction in front of the motor vehicle 1. The camera 3 is for example a CCD camera or else a CMOS camera. The camera 3 is additionally a video camera, which provides a sequence of images of the environmental region 4 and communicates it to an image processing device not illustrated in the figures. This image processing device and the camera 3 can also be integrated in a common housing.

As is apparent from Fig. 1, a target object 6, a target vehicle 7 in the embodiment, is on a roadway 5 in front of the motor vehicle 1. The image processing device is setup such that it can apply a detection algorithm to the images of the environmental region 4, which is adapted to detect target objects 6. This detection algorithm can for example be stored in a memory of the image processing device and for example be based on the algorithm AdaBoost. Such detection algorithms are already prior art and therefore are not described in more detail here. If the target object 6 is detected, thus, it can be tracked over time by the image processing device. To this too, corresponding tracking algorithms are known and therefore do not have to be described in more detail. The tracking algorithm can for example be based on the Lucas Kanade method.

The tracking of the target object 6 over time means that the target object 6 is detected in each image or in each n-th image of the image sequence and thus its current position in the respective image and relative to the motor vehicle 1 is known. Thus, the target object 6 is tracked over the sequence of the images. However, the performance of the tracking algorithm can be affected by an abrupt change of the lighting conditions in the region of the target object 6. As is apparent from Fig. 1, the target vehicle 7 arrives at a brightness change area 8, here for example a tunnel 9. The target vehicle 7 is in a tunnel entrance 10 according to Fig. 1, whereby a shadow falls on the target vehicle 7 and thus the lighting conditions in the region of the target vehicle 7 abruptly change.

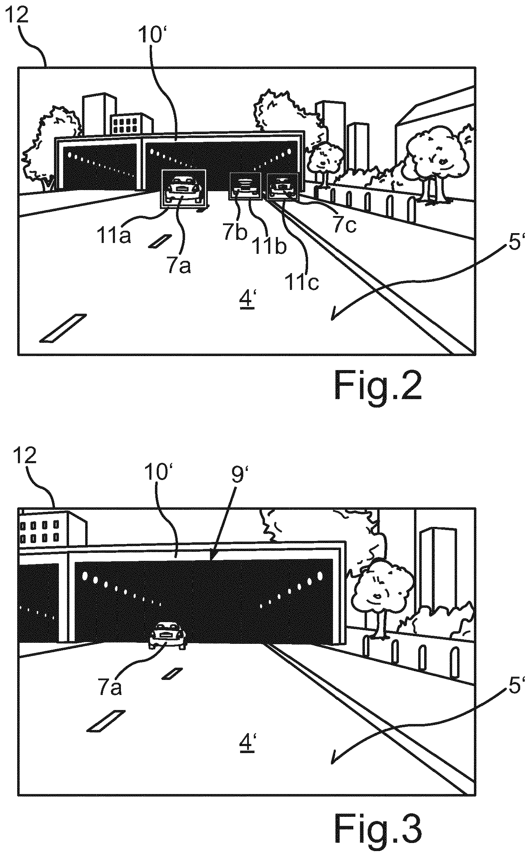

An exemplary image 12 of the camera 3 is shown in more detail in Fig. 2. In the environmental region 4', overall three target vehicles 7a, 7b, 7c detected and tracked by the camera system 2 are on the roadway 5'. The detection algorithm respectively outputs a so-called bounding box 11a, 11b, 11c to each target vehicle 7a, 7b, 7c, which characterizes the current position of the respective target vehicle 7a, 7b, 7c in the image 12.

In Fig. 2, a situation is shown, in which the two target vehicles 7b, 7c are just before the tunnel entrance 10'. In a further image 12 according to Fig. 3, the two target vehicles 7b, 7c are already in the tunnel 9' and thus cannot readily be detected by the camera system 2. Namely, the brightness of these target vehicles 7b, 7c has abruptly reduced.

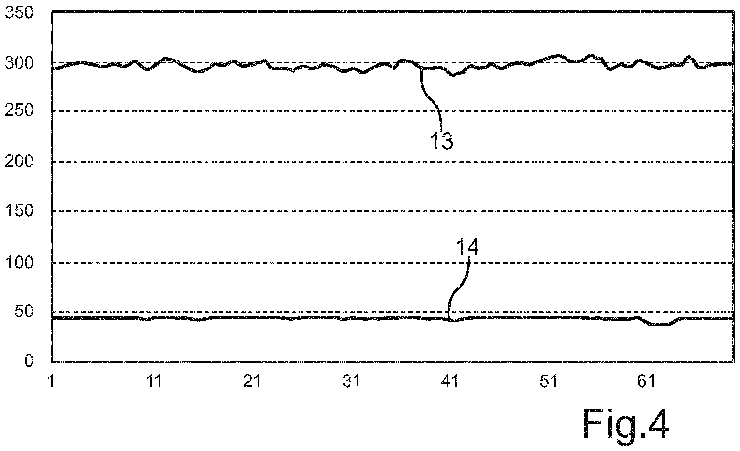

In order to detect such a situation, the image processing device continuously acquires the brightness values of the target objects 6. This means that the image processing device acquires the brightness values of pixels within the respective bounding box 11a, 11b, 11c to each image. Then, to each target object 6, an average value is respectively calculated from the brightness values to each image. A progression of the average values of a single target object 6 over the sequence of the images is shown in Fig. 4 and denoted by 13. Therein, the brightness is plotted on the y-axis; the frames are continuously plotted on the x-axis. The image processing device calculates a relative brightness of the target object 6 to each target object 6 and to each image 12. This normalized brightness is a ratio of the current average value (progression 13) to a current integration time of the image sensor. A temporal progression of this ratio is denoted by 14 in Fig. 4. Therein, the progressions shown in Fig. 4 correspond to a situation, in which significant change of the brightness of the target object does not occur.

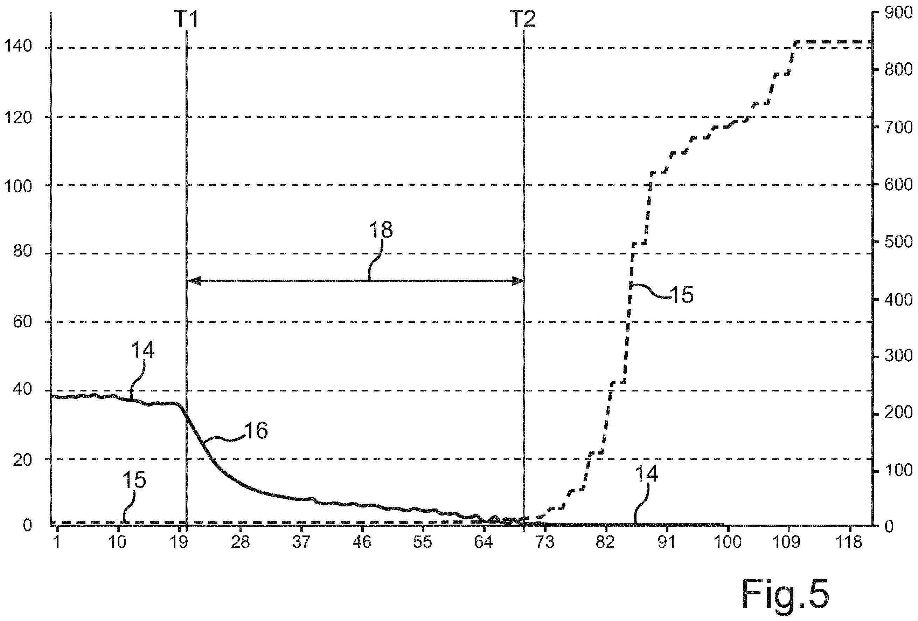

In contrast, Fig. 5 shows a situation, which corresponds to the situation according to Fig. 1. A progression of the above mentioned ratio (brightness average value to the integration time) is also denoted by 14 in Fig. 5 (left scale). A temporal progression of the integration time of the image sensor is denoted by 15 (right scale). At a point of time T1, the target vehicle 7 arrives at the tunnel entrance 10, which corresponds to the situation according to Fig. 1. As is apparent from Fig. 5, this causes an abrupt change 16 of the brightness of the target vehicle 7, that is a change of the mentioned ratio of the brightness average value to the integration time of the image sensor. This change 16 is detected by the image processing device.

With reference again to Fig. 1, the image processing device acquires a current distance 17 of the target vehicle 7 from the motor vehicle 1 within the scope of the tracking of the target vehicle 7. The distance 17 captured at the point of time T1, is interpreted as a distance of the motor vehicle 1 from the tunnel 9 (generally: from the brightness change area 8) by the image processing device. From this distance 17 and the current vehicle speed, the image processing device then calculates a period of time 18 (compare Fig. 5), which specifies, when the motor vehicle 1 will presumably arrive at the brightness change area 8 and thus the brightness of the scene of the camera 3 will change. With a distance 17 of for example 70 m and a vehicle speed of 20.9 m/s, the period of time 18 is about 3.34 s, which corresponds to a number of 50 frames with a frame rate of 15 fps (frames per second).

With reference to Fig. 5, the motor vehicle 1 then arrives at the tunnel 9 at a further point of time T2.

If the change 16 of the brightness of the target vehicle 7 is detected by the image processing device at the point of time T1, thus, at least one parameter of the camera 3 and/or at least one parameter of the tracking algorithm are manipulated for the period of time 18 between the points of time T1 and T2. The manipulation of the parameter is therefore only effected for the period of time 18 until arriving at the tunnel 9 and thus only until the point of time T2.

In this respect, a so-called keep-alive time interval can for example be increased, that is a temporal threshold up to which the detected target vehicle 7 is interpreted as present even in absence of detections in the current images. This threshold (the keep-alive time interval) can for example be manipulated such that it is greater than the current period of time 18 until arriving at the tunnel 9. The target vehicle 7 is therefore further kept in "mind".

Additionally or alternatively, at the point of time T1, the integration time of the image sensor itself can also be manipulated such that the brightness of the images 12 is overall increased and the target vehicle 7 can be detected even if it is in the tunnel 9. After entry of the motor vehicle 1 into the tunnel 9, the integration time can again be adjusted by default, that is corresponding to the progression 15 according to Fig. 5.

If multiple target vehicles 7a, 7b, 7c are detected, as shown in Fig. 2, the current distance 17 is preferably individually determined for each target vehicle 7a, 7b, 7c. Then, the period of time 18 (compare Fig. 5) can be determined to each target vehicle 7a, 7b, 7c. If multiple values are available for the period of time 18, these values can for example be averaged. Thus, the point of time T2 can be particularly precisely determined in advance. The image processing device can therefore very precisely determine in advance, at which point of time T2 the motor vehicle 1 will presumably enter the brightness change area 8.

## Claims

1. Method for tracking a target object (6) by means of a camera system (2) of a motor vehicle (1), wherein a sequence of images (12) of an environmental region (4) of the motor vehicle (1) is provided by a camera (3) of the camera system (2), and the tracking is effected by an image processing device based on the sequence of the images (12), including the steps of:
- detecting the target object (6) in an image (12) of the sequence and tracking the target object (6) over subsequent images (12) of the sequence using a tracking algorithm by the image processing device,
- acquiring brightness values of pixels of the target object (6) in the respective images (12),
- detecting a change (16) of a brightness of the depicted target object (6) based on the brightness values, and
- if the change (16) of the brightness exceeds a predetermined amount, manipulating at least one parameter of the tracking algorithm and/or at least one parameter of the camera (3) due to the detection of the change (16), wherein an average value (13) of the brightness values of the pixels of the target object (6) is respectively determined to each image (12), a ratio (14) of the respective average value (13) to a current integration time (15) of an image sensor of the camera (3) is respectively determined to each image (12) and the change (16) of the brightness is detected based on the ratios (14).

2. Method according to claim 1,
**characterized in that**
an integration time of an image sensor of the camera (3) is influenced as the parameter.

3. Method according to claim 1 or 2,
**characterized in that**
as the parameter of the tracking algorithm, a keep-alive time interval is manipulated, for which the detected target object (6) is further interpreted as present by the image processing device in absence of detections in the images (12).

4. Method according to any one of the preceding claims,
**characterized in that**
based on the change (16) of the brightness of the target object (6), a tunnel entrance (10) or a tunnel exit in front of the motor vehicle (1) is detected by the image processing device.

5. Method according to any one of the preceding claims,
**characterized in that**
the tracking of the target object (6) includes that a current distance (17) of the target object (6) from the motor vehicle (1) is determined, wherein a distance (17) acquired in the detection of the change (16) of the brightness is interpreted by the image processing device as a current distance of the motor vehicle (1) from a brightness change area (8), in which the change (16) of the brightness will presumably occur for the camera (3) too, wherein the manipulation of the at least one parameter is effected depending on the distance of the motor vehicle (1) from the brightness change area (8).

6. Method according to claim 4 and 5,
**characterized in that**
the distance (17) acquired in detecting the change (16) of the brightness is interpreted as a current distance of the motor vehicle (1) from the tunnel entrance (10) or the tunnel exit by the image processing device.

7. Method according to claim 5 or 6,
**characterized in that**
the at least one parameter of the camera (3) and/or the at least one parameter of the tracking algorithm, in particular the keep-alive time interval, are only manipulated for the period of time (18) until arriving at the brightness change area (8).

8. Camera system (2) for a motor vehicle (1) including a camera (3) for providing a sequence of images (12) of an environmental region (4) of the motor vehicle (1), and including an image processing device for tracking a target object (6) based on the sequence of the images (12), wherein the image processing device is adapted to perform a method according to any one of the preceding claims.

9. Motor vehicle (1) with a camera system (2) according to claim 8.

## Patentansprüche

1. Verfahren zum Nachverfolgen eines Zielobjekts (6) mittels eines Kamerasystems (2) eines Kraftfahrzeugs (1), wobei durch eine Kamera (3) des Kamerasystems (2) eine Folge von Bildern (12) eines Umgebungsbereichs (4) des Kraftfahrzeugs (1) bereitgestellt wird und wobei das Nachverfolgen durch eine Bildverarbeitungsvorrichtung auf der Basis der Folge der Bilder (12) ausgeführt wird, wobei das Verfahren die folgenden Schritte umfasst:
- Detektieren des Zielobjekts (6) in einem Bild (12) der Folge und Nachverfolgen des Zielobjekts (6) über aufeinanderfolgende Bilder (12) der Folge unter Verwendung eines Nachverfolgungsalgorithmus durch die Bildverarbeitungsvorrichtung,
- Erfassen von Helligkeitswerten von Pixeln des Zielobjekts (6) in den jeweiligen Bildern (12),
- Detektieren einer Änderung (16) einer Helligkeit des dargestellten Zielobjekts (6) auf der Basis der Helligkeitswerte, und
- falls die Änderung (16) der Helligkeit einen zuvor festgelegten Betrag überschreitet, Bearbeiten wenigstens eines Parameters des Nachverfolgungsalgorithmus und/oder wenigstens eines Parameters der Kamera (3) aufgrund der Detektion der Änderung (16), wobei ein Mittelwert (13) der Helligkeitswerte der Bildpunkte des Zielobjekts (6) jeweils für jedes Bild (12) bestimmt wird, wobei ein Verhältnis (14) des jeweiligen Mittelwerts (13) zu einer aktuellen Integrationszeit (15) eines Bildsensors der Kamera (3) jeweils für jedes Bild (12) bestimmt wird und die Änderung (16) der Helligkeit auf der Basis der Verhältnisse (14) detektiert wird.

2. Verfahren nach Anspruch 1,
**dadurch gekennzeichnet, dass**
eine Integrationszeit eines Bildsensors der Kamera (3) als der Parameter beeinflusst wird.

3. Verfahren nach Anspruch 1 oder 2,
**dadurch gekennzeichnet, dass**
als der Parameter des Nachverfolgungsalgorithmus ein Keep-alive-Zeitintervall bearbeitet wird, für das das detektierte Zielobjekt (6) bei Fehlen von Detektionen in den Bildern (12) durch die Bildverarbeitungsvorrichtung weiterhin als vorhanden interpretiert wird.

4. Verfahren nach einem der vorhergehenden Ansprüche,
**dadurch gekennzeichnet, dass**
auf der Basis der Änderung (16) der Helligkeit des Zielobjekts (6) ein Tunneleingang (10) oder ein Tunnelausgang vor dem Kraftfahrzeug (1) durch die Bildverarbeitungsvorrichtung detektiert wird.

5. Verfahren nach einem der vorhergehenden Ansprüche,
**dadurch gekennzeichnet, dass**
das Nachverfolgen des Zielobjekts (6) umfasst, dass ein aktueller Abstand (17) des Zielobjekts (6) vom Kraftfahrzeug (1) bestimmt wird, wobei ein Abstand (17), der bei der Detektion der Änderung (16) der Helligkeit erfasst wird, durch die Bildverarbeitungsvorrichtung als ein aktueller Abstand des Kraftfahrzeugs (1) von einem Helligkeitsänderungsbereich (8) interpretiert wird, wobei die Änderung (16) der Helligkeit vermutlich auch für die Kamera (3) erfolgt, wobei die Bearbeitung des wenigstens einen Parameters in Abhängigkeit vom Abstand des Kraftfahrzeugs (1) vom Helligkeitsänderungsbereich (8) ausgeführt wird.

6. Verfahren nach Anspruch 4 und 5,
**dadurch gekennzeichnet, dass**
der Abstand (17), der beim Detektieren der Änderung (16) der Helligkeit erfasst wird, als ein aktueller Abstand des Kraftfahrzeugs (1) vom Tunneleingang (10) oder vom Tunnelausgang durch die Bildverarbeitungsvorrichtung interpretiert wird.

7. Verfahren nach Anspruch 5 oder 6,
**dadurch gekennzeichnet, dass**
der wenigstens eine Parameter der Kamera (3) und/oder der wenigstens eine Parameter des Nachverfolgungsalgorithmus, insbesondere das Keep-alive-Zeitintervall, nur für die Zeitspanne (18) bis zur Ankunft beim Helligkeitsänderungsbereich (8) bearbeitet werden.

8. Kamerasystem (2) für ein Kraftfahrzeug (1), das eine Kamera (3) zum Bereitstellen einer Folge von Bildern (12) eines Umgebungsbereichs (4) des Kraftfahrzeugs (1) umfasst und das eine Bildverarbeitungsvorrichtung zum Nachverfolgen eines Zielobjekts (6) auf der Basis der Folge der Bilder (12) umfasst, wobei die Bildverarbeitungsvorrichtung ausgelegt ist, ein Verfahren nach einem der vorhergehenden Ansprüche auszuführen.

9. Kraftfahrzeug (1) mit einem Kamerasystem (2) nach Anspruch 8.

## Revendications

1. Procédé de suivi d'un objet cible (6) au moyen d'un système de caméra (2) d'un véhicule à moteur (1), dans lequel une séquence d'images (12) d'une région de l'environnement (4) du véhicule à moteur (1) est fournie par une caméra (3) du système de caméra (2), et le suivi est effectué par un dispositif de traitement d'images sur la base de la séquence des images (12), le procédé comprenant les étapes suivantes :
- détecter l'objet cible (6) dans une image (12) de la séquence et suivre l'objet cible (6) sur les images suivantes (12) de la séquence à l'aide d'un algorithme de suivi, par le dispositif de traitement d'images,
- acquérir les valeurs de luminosité des pixels de l'objet cible (6) dans les images respectives (12),
- détecter un changement (16) de la luminosité de l'objet cible représenté (6) sur la base des valeurs de luminosité, et
- si le changement (16) de la luminosité dépasse une quantité prédéterminée, manipuler au moins un paramètre de l'algorithme de suivi et/ou au moins un paramètre de la caméra (3) du fait de la détection du changement (16), une valeur moyenne (13) des valeurs de luminosité des pixels de l'objet cible (6) étant respectivement déterminée pour chaque image (12), un rapport (14) entre la valeur moyenne respective (13) et un temps d'intégration courant (15) d'un capteur d'images de la caméra (3) étant respectivement déterminé pour chaque image (12) et le changement (16) de la luminosité étant détecté sur la base des rapports (14).

2. Procédé selon la revendication 1,
**caractérisé en ce que** :
un temps d'intégration d'un capteur d'images de la caméra (3) est influencé en tant que paramètre.

3. Procédé selon la revendication 1 ou la revendication 2,
**caractérisé en ce que** :
en tant que paramètre de l'algorithme de suivi, un intervalle de temps de maintien est manipulé, pendant lequel l'objet cible détecté (6) est en outre interprété comme présent par le dispositif de traitement d'images en l'absence de détections dans les images (12).

4. Procédé selon l'une quelconque des revendications précédentes,
**caractérisé en ce que** :
sur la base du changement (16) de la luminosité de l'objet cible (6), une entrée de tunnel (10) ou une sortie de tunnel devant le véhicule à moteur (1) est détectée par le dispositif de traitement d'images.

5. Procédé selon l'une quelconque des revendications précédentes,
**caractérisé en ce que** :
le suivi de l'objet cible (6) comprend la détermination d'une distance courante (17) de l'objet cible (6) par rapport au véhicule à moteur (1), où une distance (17) acquise lors de la détection du changement (16) de la luminosité est interprétée par le dispositif de traitement d'images comme la distance courante du véhicule à moteur (1) par rapport à une zone de changement de la luminosité (8), où le changement (16) de la luminosité se produira probablement aussi pour la caméra (3), la manipulation de l'au moins un paramètre étant effectuée en fonction de la distance du véhicule à moteur (1) par rapport à la zone de changement de luminosité (8) .

6. Procédé selon la revendication 4 et la revendication 5,
**caractérisé en ce que** :
la distance (17) acquise lors de la détection du changement (16) de la luminosité est interprétée comme une distance courante du véhicule à moteur (1) par rapport à l'entrée du tunnel (10) ou à la sortie du tunnel par le dispositif de traitement d'images.

7. Procédé selon la revendication 5 ou la revendication 6,
**caractérisé en ce que** :
l'au moins un paramètre de la caméra (3) et/ou l'au moins un paramètre de l'algorithme de suivi, en particulier l'intervalle de temps de maintien, ne sont manipulés que pendant la période de temps (18) jusqu'à l'arrivée à la zone de changement de luminosité (8).

8. Système de caméra (2) pour un véhicule à moteur (1) comprenant une caméra (3) pour fournir une séquence d'images (12) d'une région de l'environnement (4) du véhicule à moteur (1), et comprenant un dispositif de traitement d'images pour suivre un objet cible (6) sur la base de la séquence des images (12), le dispositif de traitement d'images étant adapté pour exécuter un procédé selon l'une quelconque des revendications précédentes.

9. Véhicule à moteur (1) muni d'un système de caméra (2) selon la revendication 8.
